# EUROPÄISCHE PATENTSCHRIFT

(11) **EP 3 913 120 B1**
(45) Veröffentlichungstag und Bekanntmachung des Hinweises auf die Patenterteilung: **21.02.2024**
(21) Anmeldenummer: 21173443.9
(22) Anmeldetag: 12.05.2021
(51) Int. Cl.: D01H 4/00, B01D 46/00, D01H 11/00

(54) **FILTEREINRICHTUNG FÜR EINE KREUZSPULEN HERSTELLENDE TEXTILMASCHINE**
FILTER DEVICE FOR A TEXTILE MACHINE FOR THE PRODUCTION OF CROSS-WOUND SPOOLS
FILTRE POUR UNE MACHINE TEXTILE FABRIQUANT DES BOBINES CROISÉES

(30) Priorität: 19.05.2020 DE 102020113494
(43) Veröffentlichungstag der Anmeldung: 24.11.2021
(73) Patentinhaber: Saurer Spinning Solutions GmbH & Co. KG, 52531 Übach-Palenberg (DE)
(72) Erfinder: Uedinger, Lothar, 41068 Mönchengladbach (DE)
(74) Vertreter: Schniedermeyer, Markus

(56) Entgegenhaltungen:
- EP-A1- 0 285 247
- DE-A1- 10 250 293
- DE-A1-102008 040 992
- DE-A1-102009 012 535

## Beschreibung

Die Erfindung betrifft eine Filtereinrichtung für eine Saugeinrichtung einer Kreuzspulen herstellenden Textilmaschine mit einer an eine Unterdruckquelle angeschlossenen Zwischenkammer und einer Filterkammer, die in eine Hauptfilterkammer und eine Reservefilterkammer aufgeteilt ist, wobei die Hauptfilterkammer pneumatisch von der Zwischenkammer abkoppelbar und dann eine Reinigung der Hauptfilterkammer möglich ist.

Kreuzspulen herstellende Textilmaschinen, beispielsweise Offenend-Rotorspinnmaschinen, verfügen in der Regel über eine Vielzahl von Arbeitsstellen, die ihrerseits jeweils mit pneumatischen Verbrauchern ausgestattet sind. Solche Offenend-Rotorspinnmaschinen sind daher mit einem maschineneigenen Unterdrucksystem ausgestattet, das den an den Arbeitsstellen für einen ordnungsgemäßen Spinnprozess benötigten, so genannten Spinnunterdruck bereitstellt. Derartige Unterdrucksysteme weisen beispielsweise eine Unterdruckquelle, eine vor der Unterdruckquelle installierte Filtereinrichtung sowie einen maschinenlangen Saugkanal auf, wobei an den Saugkanal über entsprechende Zweigleitungen die einzelnen pneumatischen Verbraucher, zum Beispiel die Offenend-Spinnaggregate der Arbeitsstellen, angeschlossen sind. Bei vielen der bekannten Offenend-Rotorspinnmaschinen ist an die Filtereinrichtung außerdem noch eine Saugtraverse für die pneumatische Versorgung eines Serviceaggregates sowie eine Absaugeinrichtung zum Reinigen der Schmutztransportbänder einer unterhalb der Spinnaggregate angeordneten mechanischen Schmutzentsorgungseinrichtung angeschlossen.

In der DE 199 08 378 A1 ist beispielsweise eine Filtereinrichtung für eine Saugeinrichtung einer Offenend-Rotorspinnmaschine beschrieben, deren Filterkammer mittels verschiedener Umsteuer- und Absperrklappen in eine Hauptfilterkammer und eine Reservefilterkammer aufgeteilt ist. In den Filterkammern, das heißt, sowohl in der Hauptfilterkammer, als auch in der Reservefilterkammer, sind, meist quer zum Saugluftstrom, Filterelemente angeordnet, die die angesaugte, mit Schmutzpartikeln und Fasern verunreinigte Luft filtern. Bei diesen bekannten Filtereinrichtungen besteht allerdings das Problem, dass sich die Filterelemente durch die angesaugten Partikel oft bereits nach relativ kurzer Zeit stark zusetzen, was zu einem deutlichen Druckabfall im Unterdrucksystem der Textilmaschine führt.

Da Offenend-Rotorspinnmaschinen für einen ordnungsgemäßen Produktionsprozess jedoch stets einen gewissen Mindestunterdruck benötigen, müssen die Filterelemente in regelmäßigen Zeitabständen gereinigt werden.

Die Umsteuer- und Absperrklappen dieser Filtereinrichtungen können deshalb so eingestellt werden, dass die Saugluft bei Bedarf zeitweise vollständig nur durch die Reservefilterkammer geführt wird, so dass dann eine Reinigung der Hauptfilterkammer möglich ist. Das heißt, die Luftaustrittsöffnungen der Hauptfilterkammer, durch die im Normalbetrieb die gesamte Saugluft hindurch tritt, werden mittels Absperrorgane druckdicht geschlossen, so dass sich die Reinigungstür der Hauptfilterkammer öffnen lässt und eine Reinigung der Hauptfilterkamme möglich ist.

Nachteilig bei diesen bekannten Filtereinrichtungen ist allerdings, dass zum Zeitpunkt der Reinigung der Hauptfilterkammer oft auch das Filterelement der Reservekammer bereits so verschmutzt ist, dass ordnungsgemäße Unterdruckverhältnisse kaum noch zu gewährleisten sind.

Zur Verlängerung der Reinigungsintervalle ist es des Weiteren bekannt, ein Filterelement so in einer Filterkammer anzuordnen, dass das Filterelement, wenigstens zum Teil, selbstreinigend ist.

Eine Filtereinrichtung, die eine derartig ausgebildete Filterkammer aufweist, ist beispielsweise in der DE 198 36 065 A1 beschrieben. Das Unterdrucksystem dieser Offenend-Rotorspinnmaschine verfügt über eine Filterkammer, in der in L-förmiger Anordnung zwei Filterelemente installiert sind.

Ein erstes, im Abstand zum Filterkammerboden angeordnetes Filterelement ist dabei etwa orthogonal zur Saugluftströmung angeordnet und fungiert als Sammelsieb, während ein zweites Filterelement beabstandet zur Filterkammerseitenwandung derart in der Filterkammer angeordnet ist, dass eine zwischen dem Saugkanalanschluss und dem Anschluss für die Unterdruckquelle anstehende Saugluftströmung nahezu parallel zu diesem Filterelement verläuft. Dieses Filterelement bildet ein Entlastungssieb.

Eine derartige Anordnung der Filterelemente innerhalb der Filterkammer führt dazu, dass sich die über den Saugkanalanschluss in die Filterkammer gelangenden, zum überwiegenden Teil recht feinen Schmutz- und Faserpartikel in erster Linie auf dem Sammelsieb absetzen und dort festgelegt bleiben, während das Entlastungssieb, an dem die Saugluftströmung zunächst nahezu parallel vorbeistreicht, lange Zeit von Schmutzpartikeln weitestgehend frei bleibt. Das bedeutet, mit einer solchen Filtereinrichtung lassen sich zwar relativ lange Reinigungsintervalle realisieren, allerdings müssen Textilmaschinen, die mit derartigen Filtereinrichtungen ausgestattet sind, zum Reinigen des Sammelsiebes abgeschaltet werden.

Die DE 10 2009 012535 A1 offenbart eine Filtereinrichtung für eine Kreuzspulen herstellende Textilmaschine.

Ausgehend vom vorstehend beschriebenen Stand der Technik liegt der Erfindung die Aufgabe zugrunde, eine Filtereinrichtung für die Saugeinrichtung einer Kreuzspulen herstellenden Textilmaschine derart zu modifizieren, dass einerseits eine Reinigung der Hauptfilterkammer der Textilmaschine bei laufender Textilmaschine realisierbar und außerdem sichergestellt ist, dass während dieser Reinigung ein ordnungsgemäßer Mindestspinnunterdruck gewährleistet bleibt.

Die Aufgabe wird erfindungsgemäß dadurch gelöst, dass im Bereich der Reservefilterkammer eine mit der Umgebungsluft korrespondierende, definiert betätigbare Lufteinströmeinrichtung angeordnet ist, die im Bedarfsfall eine Reinigung des Filterelements der Reservefilterkammer ermöglicht.

Vorteilhafte Weiterbildungen der Erfindung sind Gegenstand der Unteransprüche.

Die erfindungsgemäße Ausführungsform vereint in sich die Vorteile der aus dem Stand der Technik bekannten Filtereinrichtungen, ohne jedoch deren Nachteile aufzuweisen. Das heißt, die erfindungsgemäße Filtereinrichtung zeichnet sich nicht nur durch eine kompakte Bauweise, lange Reinigungsintervalle, sondern auch durch eine gute Wirtschaftlichkeit aus. Durch die erfindungsgemäße Lufteinströmeinrichtung ist beispielsweise auf relativ einfache und sichere Weise zu gewährleisten, dass sich die Reservefilterkammer bei Bedarf stets in einem voll betriebsbereiten Zustand befindet. Das heißt, durch entsprechende Betätigung der Lufteinströmeinrichtung kann zuverlässig verhindert werden, dass das Filterelement der Reservefilterkammer zum Zeitpunkt seiner Inbetriebnahme der Reservefilterkammer bereits ganz oder teilweise durch ein Faservlies abgedeckt ist. Wenn zum Beispiel eine Reinigung der Hauptfilterkammer ansteht und der Saugluftstrom der Saugeinrichtung der Kreuzspulen herstellenden Textilmaschine für eine gewisse Zeit lang allein durch die Reservefilterkammer strömt, wird durch Betätigung der Lufteinströmeinrichtung zunächst das Filterelement der Reservefilterkammer gereinigt und damit sichergestellt, dass das Filterelement zumindest zu Beginn der Reinigung der Hauptfilterkammer relativ sauber und damit gewährleistet ist, dass die Unterdruckversorgung der Offenend-Spinnaggregate der Textilmaschine auch während der Reinigung der Hauptfilterkammer weitestgehend unbeeinflusst bleibt.

In vorteilhafter Ausführungsform ist die Lufteinströmeinrichtung als Lufteinlassschlitz ausgebildet, der durch ein Verschlussmittel, insbesondere einen Schieber, abdeckbar ist. Eine solche Ausbildung ist relativ leicht zu realisieren, recht kostengünstig und gewährleistet einen zuverlässigen Betrieb.

Vorzugsweise ist der Lufteinlassschlitz dabei so angeordnet und ausgebildet, dass bei geöffnetem Lufteinlassschlitz von außen ein Luftstrom in die Reservefilterkammer eintritt, der am Filtersieb vorbeiströmt und dabei die anhaftenden Fasern vom Filterelement löst. Das Öffnen der Lufteinströmeinrichtung und damit das Ablösen der Fasern vom Filterelement sowie deren anschließende Überführung in die Hauptfilterkammer erfolgt vorteilhafterweise unmittelbar vor dem Umschalten des Saugluftstromes. Das heißt, die erfindungsgemäße Lufteinströmeinrichtung wird betätigt und damit das Filtersieb der Reservefilterkammer gereinigt, bevor die Hauptfilterkammer, um eine Reinigung zu ermöglichen, zeitweise unterdrucklos geschaltet und der gesamte Saugluftstrom durch die Reservefilterkammer geleitet wird.

In vorteilhafter Ausführungsform ist der Lufteinlassschlitz im Bereich eines Sichtfensters der Reservefilterkammer und durch einen definiert ansteuerbaren Schieber abdeckbar. Der Schieber ist seinerseits, beispielsweise durch einen Pneumatikzylinder, betätigbar. Das Sichtfenster der Reservefilterkammer ist dabei im Bereich des Filterelements der Reservefilterkammer angeordnet, so dass durch die Anordnung eines Lufteinlassschlitzes, der während des regulären Spinnbetriebes durch einen Schieber abgedeckt ist, auf einfache Weise eine Lufteinströmeinrichtung realisierbar ist, die eine effektive Reinigung des Filterelementes der Reservefilterkammer ermöglicht.

Die Ansteuerung des Schiebers kann dabei entweder manuell durch das Bedienpersonal, oder, abhängig von einem entsprechenden Signal eines Unterdrucksensors, beispielsweise durch die Zentralsteuereinheit der Offenend-Rotorspinnmaschine erfolgen. Das heißt, die Ansteuerung des Schiebers und damit die Öffnung des Lufteinlassschlitzes erfolgt automatisch, abhängig von einer Sensoreinrichtung, die zum Beispiel die Unterdruckverhältnisse im Saugkanal misst.

Eine weitere vorteilhafte Ausführungsform besteht darin, an der Reinigungstür der Hauptfilterkammer eine entsprechende Sensoreinrichtung anzuordnen. Das heißt, sobald jemand versucht, die Reinigungstür der Hauptfilterkammer zu öffnen, wird der Schieber so angesteuert, dass er den Lufteinlassschlitz freigibt. Die durch den Lufteinlassschlitz einströmende Saugluftströmung reinigt dann das Filterelement der Reservefilterkammer, bevor der Betrieb der beiden Filterkammern getauscht wird.

Die Erfindung wird nachfolgend anhand eines in den Zeichnungen dargestellten Ausführungsbeispiels näher erläutert.

Es zeigt:
- Fig. 1: perspektivisch den Endbereich einer Offenend-Rotorspinnmaschine, mit einer im Endgestell angeordneten, erfindungsgemäß ausgebildeten Filtereinrichtung,
- Fig. 2: in Seitenansicht, eine im Endgestell angeordnete, erfindungsgemäße Filtereinrichtung, teilweise im Schnitt,
- Fig. 3: die im Bereich des Sichtfensters einer Reservefilterkammer der Filtereinrichtung angeordnete, durch einen Lufteinlassschlitz und einen Schieber gebildete Lufteinströmeinrichtung, wobei der Lufteinlassschlitz durch den Schieber abgedeckt ist,
- Fig. 4: die in Figur 3 dargestellte Lufteinströmeinrichtung, wobei der Schieber so geschwenkt ist, dass der Lufteinlassschlitz geöffnet ist.

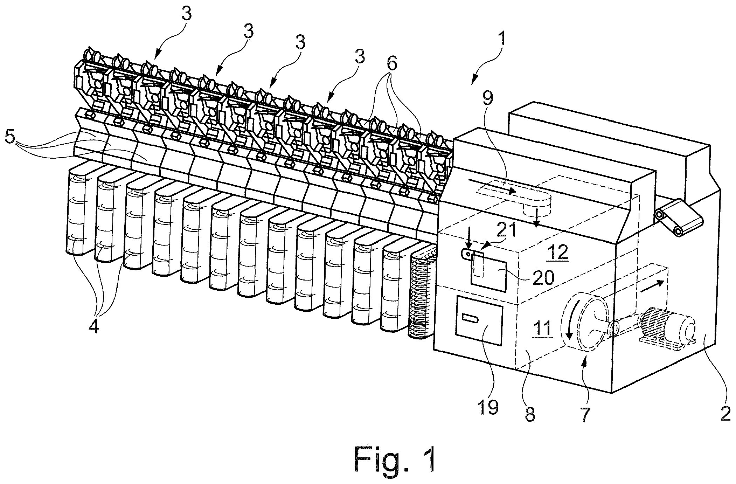

Die Figur 1 zeigt einen Endbereich einer Offenend-Rotorspinnmaschine 1. Derartige Offenend-Rotorspinnmaschinen 1 verfügen in der Regel über zwei parallel angeordnete Arbeitsstellenreihen, die zwischen zwei Endgestellen 2 positioniert sind und ihrerseits jeweils eine Vielzahl von nebeneinander angeordneten Arbeitsstellen 3 aufweisen. Auf diesen Arbeitsstellen 3 wird jeweils, wie bekannt, ein in einer Spinnkanne 4 bevorratetes Faserband mittels eines Offenend-Spinnaggregats 5 zu einem Faden versponnen, der anschließend auf einer arbeitsstelleneigenen Spulvorrichtung 6 zu einer großvolumigen (nicht dargestellten) Kreuzspule gewickelt wird. Die Offenend-Spinnaggregate 5 solcher Offenend-Rotorspinnmaschinen 1 benötigen dabei für einen ordnungsgemäßen Spinnprozess einen bestimmten, so genannten Spinnunterdruck. Dieser Spinnunterdruck wird durch ein textilmaschineneigenes Unterdrucksystem bereitgestellt, das über eine Filtereinrichtung 10 verfügt, die unter anderem eine Unterdruckquelle 7, eine Filterkammer 8 sowie einen maschinenlangen Saugkanal 9 aufweist, wobei im Bereich der Arbeitsstellen 3 spezielle Pneumatikleitungen vom Saugkanal 9 abzweigen, an die die unterdruckbeaufschlagbaren Rotorgehäuse der Offenend-Spinnaggregate 5 angeschlossen sind.

Im Bereich eines Endgestelles 2 sind an den Saugkanal 9 oder direkt an die Filterkammer 8 außerdem, was aus Gründen der besseren Übersichtlichkeit in den Figuren nicht dargestellt ist, oft Absaugleitungen einer maschineneigenen Schmutzentsorgungseinrichtung angeschlossen. Diese Schmutzentsorgungseinrichtung besteht dabei oft aus maschinenlangen Schmutztransportbändern, die unterhalb der Faserbandauflöseeinrichtung der Offenend-Spinnaggregate 5 angeordnet sind und die im Bereich des Endgestelles 2 durch eine Absaugeinrichtung pneumatisch entsorgt werden.

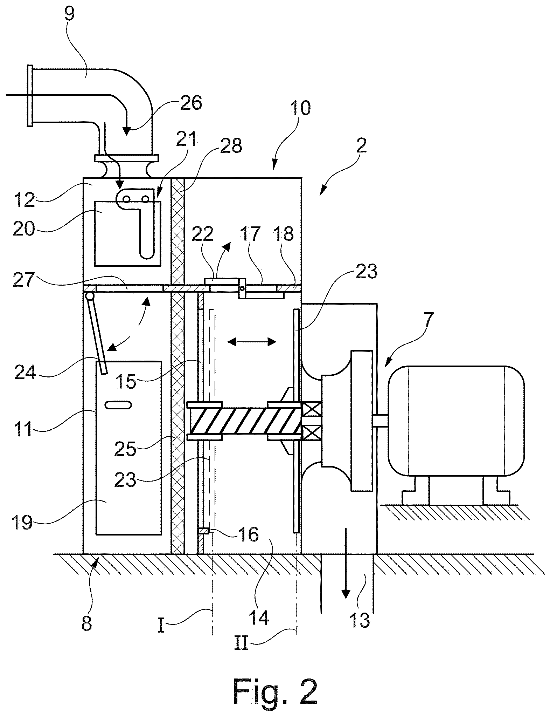

Wie nachfolgend anhand der Figur 2 näher erläutert wird, ist die Filterkammer 8 der Filtereinrichtung 10 in eine Hauptfilterkammer 11 und eine Reservefilterkammer 12 aufgeteilt, wobei die Hauptfilterkammer 11 im Bedarfsfall temporär vom Unterdrucksystem der Offenend-Rotorspinnmaschinen 1 abschaltbar ist.

Wie in Figur 1 angedeutet, weist die Hauptfilterkammer 11 eine während des regulären Spinnbetriebes eine druckdicht verschließbare Reinigungstür 19 auf, die zum Zwecke der Reinigung der Hauptfilterkammer 11 abnehmbar ist. Im Bereich der Reservefilterkammer 12 ist ein Sichtfenster 20 angeordnet, das einen Blick auf das Filterelement 28 der Reservefilterkammer 12 ermöglicht. Das Sichtfenster 20 ist außerdem mit einer erfindungsgemäß ausgebildeten Lufteinströmeinrichtung 21 ausgestattet.

Die Figur 2 zeigt in Seitenansicht, teilweise im Schnitt, ein Ausführungsbeispiel für eine in einem Endgestell 2 einer Kreuzspulen herstellenden Textilmaschine, zum Beispiel einer Offenend-Rotorspinnmaschine 1, angeordnete Filtereinrichtung 10. Wie ersichtlich und vorstehend bereits angedeutet, weist die Filtereinrichtung 10 unter anderem eine Filterkammer 8 auf, die in zwei Filterkammern, eine Hauptfilterkammer 11 und eine Reservefilterkammer 12, aufgeteilt ist. Die Filtereinrichtung 10 ist über einen Saugkanal 9 mit den in Figur 2 nicht dargestellten pneumatischen Verbrauchern der Offenend-Rotorspinnmaschine 1 verbunden und kann, beispielsweise über einen Abluftkanal 13, an eine spinnereieigene Absauganlage angeschlossen sein. In der Regel weist die Filtereinrichtung 10 für jede der beiden Arbeitsstellenreihen der Offenend-Rotorspinnmaschine 1 eine eigene Filterkammer 8 auf. Das heißt, im Endgestell 2 sind nebeneinander zwei identische Filterkammern 8 angeordnet.

Die Filterkammern 8 stehen jeweils mit einer Zwischenkammer 14 in Verbindung, an die ihrerseits eine Unterdruckquelle 7 angeschlossen ist. Wie vorstehend bereits angedeutet, sind die Filterkammern 8 jeweils in eine Hauptfilterkammer 11 und eine Reservefilterkammer 12 aufgeteilt, wobei die Hauptfilterkammer 12 über eine Luftdurchtrittsöffnung 15, die in einer Trennwand 16 angeordnet ist, mit der Zwischenkammer 14 verbunden ist. Die Reservefilterkammer 12 ist über eine Luftdurchtrittsöffnung 17 in einer Trennwand 18 an die Zwischenkammer 14 angeschlossen.

Im Bereich der Luftdurchtrittsöffnung 17 ist ein Absperrmittel 22 installiert, das gegenläufig zu einem im Bereich der Luftdurchtrittsöffnung 15 angeordneten, kompakten Absperrorgan 23 ansteuerbar ist. Das heißt, wenn das Absperrorgan 23 in einer zweiten Endstellung II positioniert ist, in der die lichte Querschnittsfläche der Luftdurchtrittsöffnung 15 nahezu vollständig freigegeben ist, hält das Absperrmittel 22 die Luftdurchtrittsöffnung 17 der Reservefilterkammer 12 geschlossen. Entsprechend ist die Luftdurchtrittsöffnung 17 geöffnet, wenn das Absperrorgan 23 in einer ersten Endstellung I steht, in der die zugehörige Luftdurchtrittsöffnung 15 geschlossen ist.

Eingangsseitig der Hauptfilterkammer 11 befindet sich des Weiteren eine Lufteintrittsöffnung 27, die durch eine Absperrklappe 24 verschließbar ist. Die Absperrklappe 24 wird dabei synchron mit dem Absperrorgan 23 geöffnet oder geschlossen.

Bei dem in Figur 2 dargestellten Ausführungsbeispiel weist das Absperrorgan 23 eine rotierbar gelagerte, vorzugsweise mittels eines elektrischen Antriebes definiert drehbare Lagerwelle auf, auf der eine Lagerbuchse axial verstellbar, jedoch gegen Drehung gesichert, geführt ist. An der Lagerbuchse ist das Verschlusselement des Absperrorgans 23 festgelegt, das durch entsprechende Ansteuerung des elektrischen Antriebes entweder in der zweiten Endstellung II oder in der ersten Endstellung I positionierbar ist, wobei in der ersten Endstellung I sichergestellt ist, dass die Luftdurchtrittsöffnung 15 druckdicht verschlossen ist.

Wie ersichtlich, weist die Hauptfilterkammer 11 ein Filterelement 25 auf und ist über eine abnehmbare Reinigungstür 19 zugängig. Vorzugsweise ist im Bereich der Reinigungstür 19 außerdem eine nicht dargestellte Druckentlastungseinrichtung vorgesehen, über die die Hauptfilterkammer 11 bei Betätigung eines entsprechenden Handgriffs automatisch an den Normalluftdruck angeschlossen wird, so dass die Reinigungstür 19 nach ihrer Entriegelung problemlos abgenommen und das Filterelement 25 gereinigt werden kann.

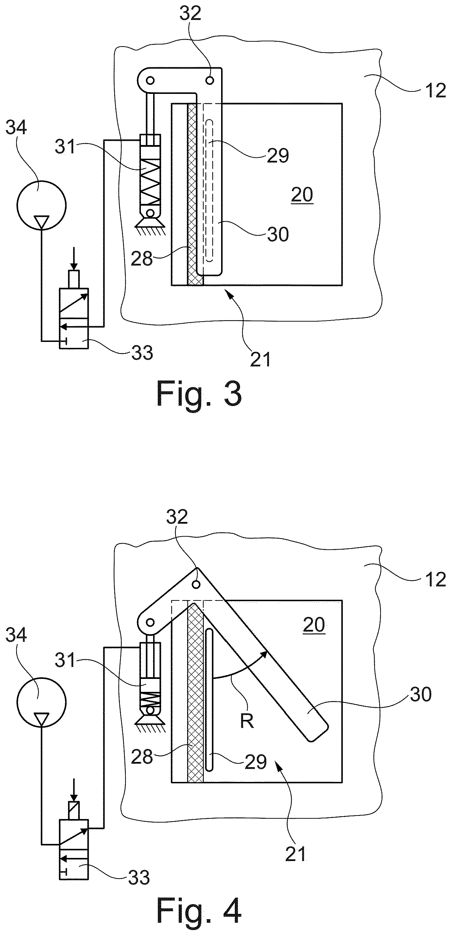

Die Reservefilterkammer 12 verfügt über ein Filterelement 28 und weist ein Sichtfenster 20 auf. Im Bereich des Sichtfensters 20 ist eine erfindungsgemäß ausgebildete Lufteinströmeinrichtung 21 installiert. Das heißt, in das Sichtfenster 20 ist ein Lufteinlassschlitz 29 eingearbeitet, der während des regulären Spinnprozesses durch einen zum Beispiel schwenkbar gelagerten Schieber 30 abgedeckt ist. Der Schieber 30 ist dabei, beispielsweise mittels eines Pneumatikzylinders 31, so positionierbar, dass der Lufteinlassschlitz 29 entweder verschlossen oder offen ist. Bei offen stehendem Lufteinlassschlitz 29 kann von außen ein Luftstrom in die Reservefilterkammer 12 einströmen, der, am Filterelement 28 der Reservefilterkammer 12 vorbeistreichend, das Filterelement 28 reinigt. Die Figuren 3 und 4 zeigen in einem größeren Maßstab eine im Bereich des Sichtfensters 20 einer Reservefilterkammer 12 angeordnete, erfindungsgemäß ausgebildete Lufteinströmeinrichtung 21. Wie ersichtlich, ist in das Sichtfenster 20 der Reservefilterkammer 12 ein Lufteinlassschlitz 29 eingearbeitet, der, wie in Figur 3 dargestellt, während des regulären Spinnbetriebes durch einen schwenkbar gelagerten Schieber 30 abgedeckt und damit verschlossen ist. An den um einen Drehpunkt 32 schwenkbar gelagerten Schieber 30 ist ein Betätigungsmittel, beispielsweise ein Pneumatikzylinder 31, angeschlossen. Der Pneumatikzylinder 31 ist dabei beispielsweise mittels eines Elektromagnetventils 33 durch die Zentralsteuereinheit der Offenend-Rotorspinnmaschine 1 definiert ansteuerbar. Das heißt, der Pneumatikzylinder 31 verfügt zum Beispiel über eine Druckfeder, die dafür sorgt, dass der Schieber 30 während des regulären Spinnbetriebes in der in Figur 3 dargestellten Stellung, in der der Lufteinlassschlitz 29 abgedeckt und damit die Lufteinströmeinrichtung 21 außer Betrieb ist, positioniert ist.

Wenn zur Reinigung des Filterelementes 28 der Reservefilterkammer 12 die Lufteinströmeinrichtung 21 aktiviert werden soll, wird das Elektromagnetventil 33 so geschaltet, dass der Pneumatikzylinder 31 an die die Druckluftquelle 34 anschlossen ist und so druckbeaufschlagt wird, dass der Pneumatikzylinder 31 einfährt und dabei den Schieber 30, wie in Figur 4 dargestellt, in Richtung R schwenkt. In dieser Stellung des Schiebers ist der Lufteinlassschlitz 29 offen, so dass von außen eine Luftströmung in die Reservefilterkammer 12 eintritt, die am Filterelement 28 der Reservefilterkammer 12 vorbeiströmt und diese dabei reinigt, das heißt, von anhaftendem Faserflug befreit.

### Funktion der erfindungsgemäßen Reinigungseinrichtung:

Während des "normalen" Spinnbetriebes sorgt der rotierende Ventilator der Unterdruckquelle 7 dafür, dass im Eintrittsbereich der Filterkammern 8, speziell im Bereich des maschinenlangen Saugkanals 9, der mit den pneumatischen Verbrauchern der Offenend-Rotorspinnmaschine 1, beispielsweise den Offenend-Spinnaggregaten 5, verbunden ist, ein Unterdruck ansteht.

Die durch den Unterdruck entstehende Saugluftströmung 26 bewegt sich dabei, da die Luftdurchtrittsöffnung 17 in der Trennwand 18 der Reservefilterkammer 12 geschlossen ist, die Absperrklappe 24 und die Luftdurchtrittsöffnungen 15 in der Trennwand 16 der Hauptfilterkammer 11 aber offen sind, über die Zwischenkammer 14 zur Unterdruckquelle 7. Die Saugluftströmung 26 durchströmt dabei das Filterelement 25 der Hauptfilterkammer 11 und wird dort gereinigt. Nach einer bestimmten Betriebszeit stellt sich aufgrund der zunehmenden Verschmutzung des Filterelementes 25 ein Unterdruckverlust ein, was beispielsweise durch eine im Bereich des Saugkanals 9 installierten Sensoreinrichtung erfassbar ist. Der Unterdruckverlust wird, zum Beispiel optisch und/oder akustisch, angezeigt und somit gemeldet, dass eine Reinigung der Hauptfilterkammer 11 speziell ihres Filterelementes 25 notwendig ist.

In einem solchen Fall muss entweder das zuständige, durch das optische und/oder akustische Signal alarmierte Bedienpersonal oder die entsprechend unterrichtete Zentralsteuereinrichtung der Offenend-Rotorspinnmaschine 1 dafür sorgen, dass bezüglich der Reinigung der Arbeitsluft von der Hauptfilterkammer 11 auf die Reservefilterkammer 12 umgeschaltet und die Hauptfilterkammer 11 unterfrei gemacht wird. Das heißt, die Luftdurchtrittsöffnung 15 der Hauptfilterkammer 11 wird durch das Absperrorgan 23 und die Lufteintrittsöffnung 27 der Hauptfilterkammer 11 durch die Absperrklappe 24 geschlossen und gleichzeitig das Absperrmittel 22 in den Bereich der Luftdurchtrittsöffnung 17 der Reservefilterkammer 12 derart geschwenkt, dass der Saugluftstrom 26 durch das Filterelement 28 der Reservefilterkammer 12 strömt.

Um zu verhindern, dass das Filterelement 28 der Reservefilterkammer 12 zum Zeitpunkt seiner Inbetriebnahme bereits relativ stark verschmutzt ist, wird vor dem Umschalten des Saugluftstromes 26 von der Hauptfilterkammer 11 auf die Reservefilterkammer 12 allerdings dafür gesorgt, dass das Filterelement 28 der Reservefilterkammer 12 vor dem Umschalten gereinigt wird. Zu diesem Zweck kommt eine im Bereich des Sichtfensters 20 der Reservefilterkammer 12 installierte, erfindungsgemäße Lufteinströmeinrichtung 21 zum Einsatz. Das heißt, ein zwischen einer Druckluftquelle 34 und einem Pneumatikzylinder 31 angeordnetes Elektromagnetventil 33 wird so geschaltet, dass der Pneumatikzylinder 31 einen Schieber 30 aus der in Figur 3 dargestellten Verschlussstellung in die in Figur 4 dargestellte Betriebsstellung schwenkt. Das heißt, der schwenkbar gelagerte Schieber 30 wird aus einer Stellung, in der er während des regulären Spinnbetriebes positioniert ist und in der der in das Sichtfenster 20 der Reservefilterkammer 12 eingearbeitete Lufteinlassschlitz 29 verschlossen ist, in Richtung R geschwenkt und dabei in eine Stellung überführt, in der der Lufteinlassschlitz 29 offen ist. Über den offenen Lufteinlassschlitz 29 kann dann von außen eine Luftströmung in die Reservefilterkammer 12 eintreten, die so am Filterelement 28 der Reservefilterkammer 12 vorbeiströmt, dass eine Reinigung des Filterelements 28 stattfindet.

### Bezugszeichen

| | | | |
|---|---|---|---|
| 1 | Offenend-Rotorspinnmaschine | 20 | Sichtfenster |
| 2 | Endgestell | 21 | Lufteinströmeinrichtung |
| 3 | Arbeitsstelle | 22 | Absperrmittel |
| 4 | Spinnkanne | 23 | Absperrorgan |
| 5 | Offenend-Spinnaggregat | 24 | Absperrklappe |
| 6 | Spulvorrichtung | 25 | Filterelement |
| 7 | Unterdruckquelle | 26 | Saugluftströmung |
| 8 | Filterkammer | 27 | Lufteintrittsöffnung |
| 9 | Saugkanal | 28 | Filterelement |
| 10 | Filtereinrichtung | 29 | Lufteinlassschlitz |
| 11 | Hauptfilterkammer | 30 | Schieber |
| 12 | Reservefilterkammer | 31 | Pneumatikzylinder |
| 13 | Abluftkanal | 32 | Drehpunkt |
| 14 | Zwischenkammer | 33 | Elektromagnetventil |
| 15 | Luftdurchtrittsöffnung | 34 | Druckluftquelle |
| 16 | Trennwand | | |
| 17 | Luftdurchtrittsöffnung | I | erste Endstellung |
| 18 | Trennwand | II | zweite Endstellung |
| 19 | Reinigungstür | R | Richtung |

## Patentansprüche

1. Filtereinrichtung (10) für eine Saugeinrichtung einer Kreuzspulen herstellenden Textilmaschine (1) mit einer an eine Unterdruckquelle (7) angeschlossenen Zwischenkammer (14) und einer Filterkammer (8), die in eine Hauptfilterkammer (11) und eine Reservefilterkammer (12) mit einem Filterelement (28) aufgeteilt ist, wobei die Hauptfilterkammer (11) pneumatisch von der Zwischenkammer (14) abkoppelbar und dann eine Reinigung der Hauptfilterkammer (11) möglich ist,
**dadurch gekennzeichnet,**
**dass** im Bereich der Reservefilterkammer (12) eine mit der Umgebungsluft korrespondierende, definiert betätigbare Lufteinströmeinrichtung (21) angeordnet ist, die im Bedarfsfall eine Reinigung des Filterelements (28) der Reservefilterkammer (12) ermöglicht.

2. Filtereinrichtung (10) nach Anspruch 1, **dadurch gekennzeichnet, dass** die Lufteinströmeinrichtung (21) als Lufteinlassschlitz (29) ausgebildet ist, der durch ein Verschlussmittel abdeckbar ist.

3. Filtereinrichtung (10) nach Anspruch 2, **dadurch gekennzeichnet, dass** der Lufteinlassschlitz (29) so angeordnet und ausgebildet ist, dass bei geöffnetem Lufteinlassschlitz (29) ein Luftstrom in die Reservefilterkammer (12) eintritt, der am Filterelement (28) vorbeiströmt und dabei die anhaftenden Fasern vom Filterelement (28) löst.

4. Filtereinrichtung (10) nach einem der Ansprüche 2 oder 3, **dadurch gekennzeichnet, dass** der Lufteinlassschlitz (29) im Bereich eines Sichtfensters (20) der Reservefilterkammer (12) angeordnet ist.

5. Filtereinrichtung (10) nach einem der Ansprüche 2 bis 4, **dadurch gekennzeichnet, dass** das Verschlussmittel als Schieber (30) ausgebildet ist.

6. Filtereinrichtung (10) nach Anspruch 5, **dadurch gekennzeichnet, dass** der Schieber (30), insbesondere durch einen Pneumatikzylinder (31), definiert ansteuerbar ist.

7. Filtereinrichtung (10) nach Anspruch 5, **dadurch gekennzeichnet, dass** der Schieber (30) durch das Bedienpersonal manuell ansteuerbar ist.

8. Filtereinrichtung (10) nach einem der Ansprüche 5 oder 6, **dadurch gekennzeichnet, dass** die Ansteuerung des Schiebers (30), abhängig von einem entsprechenden Signal eines Unterdrucksensors, durch die Zentralsteuereinheit der Offenend-Rotorspinnmaschine (1) erfolgen kann.

## Claims

1. Filter device (10) for a suction device of a textile machine (1) which produces cross-wound bobbins, comprising an intermediate chamber (14) connected to a vacuum source (7) and a filter chamber (8) which is divided into a main filter chamber (11) and a reserve filter chamber (12) having a filter element (28), wherein the main filter chamber (11) can be pneumatically decoupled from the intermediate chamber (14) and then a cleaning of the main filter chamber (11) is possible,
**characterized in that**
an air inlet device (21) is arranged in the region of the reserve filter chamber (12), which air inlet device corresponds to the ambient air and can be actuated in a defined manner, and which, if necessary, allows the filter element (28) of the reserve filter chamber (12) to be cleaned.

2. Filter device (10) according to claim 1, **characterized in that** the air inlet device (21) is designed as an air inlet slot (29) which can be covered by a closing means.

3. Filter device (10) according to claim 2, **characterized in that** the air inlet slot (29) is arranged and designed such that, when the air inlet slot (29) is open, an air flow enters the reserve filter chamber (12), which air flow flows past the filter element (28) and thereby releases the adhering fibers from the filter element (28).

4. Filter device (10) according to either of claims 2 or 3, **characterized in that** the air inlet slot (29) is arranged in the region of a viewing window (20) of the reserve filter chamber (12).

5. Filter device (10) according to any of claims 2 to 4, **characterized in that** the closing means is designed as a slide (30).

6. Filter device (10) according to claim 5, **characterized in that** the slide (30) can be controlled in a defined manner, in particular by a pneumatic cylinder (31).

7. Filter device (10) according to claim 5, **characterized in that** the slide (30) can be manually controlled by the operating personnel.

8. Filter device (10) according to either of claims 5 or 6, **characterized in that** the slide (30) can be controlled by the central control unit of the open-end rotor spinning machine (1) on the basis of a corresponding signal from a vacuum sensor.

## Revendications

1. Dispositif de filtre (10) pour un dispositif d'aspiration d'une machine textile (1) fabriquant des bobines croisées, comportant une chambre intermédiaire (14) raccordée à une source de dépression (7) et une chambre à filtre (8), qui est répartie en une chambre à filtre principal (11) et une chambre à filtre de réserve (12) comportant un élément de filtre (28), la chambre à filtre principal (11) pouvant être désaccouplée pneumatiquement de la chambre intermédiaire (14) et un nettoyage de la chambre à filtre principal (11) étant alors possible,
**caractérisé en ce**
**qu'**un dispositif d'entrée d'air (21), correspondant avec l'air ambiant, pouvant être actionné de manière définie et qui permet en cas de besoin un nettoyage de l'élément de filtre (28) de la chambre à filtre de réserve (12), est disposé dans la zone de la chambre à filtre de réserve (12).

2. Dispositif de filtre (10) selon la revendication 1, **caractérisé en ce que** le dispositif d'entrée d'air (21) est conçu comme une fente d'entrée d'air (29) qui peut être recouverte par un moyen de fermeture.

3. Dispositif de filtre (10) selon la revendication 2, **caractérisé en ce que** la fente d'entrée d'air (29) est disposée et conçue de manière telle que lorsque la fente d'entrée d'air (29) est ouverte, un flux d'air pénètre dans la chambre à filtre de réserve (12), s'écoule le long de l'élément de filtre (28) et détache ce faisant les fibres qui adhèrent de l'élément de filtre (28).

4. Dispositif de filtre (10) selon l'une des revendications 2 ou 3, **caractérisé en ce que** la fente d'entrée d'air (29) est disposée dans la zone d'un regard (20) de la chambre à filtre de réserve (12).

5. Dispositif de filtre (10) selon l'une des revendications 2 à 4, **caractérisé en ce que** le moyen de fermeture est conçu comme une glissière (30).

6. Dispositif de filtre (10) selon la revendication 5, **caractérisé en ce que** la glissière (30) peut être commandée de manière définie, en particulier par un vérin pneumatique (31).

7. Dispositif de filtre (10) selon la revendication 5, **caractérisé en ce que** la glissière (30) peut être commandée manuellement par un opérateur.

8. Dispositif de filtre (10) selon l'une des revendications 5 ou 6, **caractérisé en ce que** la commande de la glissière (30), en fonction d'un signal correspondant d'un capteur de dépression, peut avoir lieu par l'unité de commande centrale de la machine à filer à rotor à bout libre (1).
